# EUROPEAN PATENT APPLICATION

(11) **EP 4 621 208 A1**
(43) Date of publication of application: **24.09.2025**
(21) Application number: 25158952.9
(22) Date of filing: 19.02.2025
(51) Int. Cl.: F02D 35/02, F02D 41/00

(54) **ENGINE DEVICE**

(30) Priority: 18.03.2024 JP 2024042190
(71) Applicant: Yanmar Holdings Co., Ltd., Osaka-shi, Osaka (JP)
(72) Inventor: MATSUNAGA, Daichi, Osaka (JP); TOSHINAGA, Kazuteru, Osaka (JP)
(74) Representative: Novagraaf International SA

(57) **Abstract**

[Problem] To provide an engine device that is capable of suppressing pre-ignition and achieving stable combustion in an engine that is driven by heating a low GHG fuel having low greenhouse gas emissions, such as ammonia or methanol.

[Solution] An engine device 1 drives an engine 2 by supplying a low GHG fuel having low greenhouse gas emissions, the engine device 1 including a heating unit 40 that heats at least one of air that is mixed with the low GHG fuel, and the low GHG fuel. In a case where pre-ignition of the low GHG fuel in the engine 2 occurs, or is predicted, heating by the heating unit 40 is reduced or stopped.

## Description

### TECHNICAL FIELD

The present invention relates to an engine device that supplies a low greenhouse gas (GHG) fuel having low greenhouse gas emissions, such as ammonia or methanol, to an engine, to drive the engine.

### BACKGROUND ART

Conventionally, engine devices include those that supply a low GHG fuel having low greenhouse gas emissions, such as ammonia or methanol, to an engine to drive the engine. An engine device stores a low GHG fuel in a liquid state, and supplies the low GHG fuel to a combustion chamber of an engine by injecting the low GHG fuel into an intake air path that is connected to the engine, or into the combustion chamber.

For example, the ammonia combustion system disclosed in Patent Document 1 is a system that mixes ammonia in a liquid state with a petroleum-based fuel, and then injects the mixture. In particular, liquid ammonia or ammonia water is atomized in a fluid mixed gas, mixed with the fuel, and then supplied to a diesel engine or a boiler as an ammonia-mixed fuel or an ammonia water-mixed fuel. The ammonia that is been injected into the combustion chamber of a diesel engine or the combustion chamber of a boiler with a petroleum-based fuel has a boiling point of about -33°C under atmospheric pressure, and is immediately vaporized in the combustion chamber to become a combustible gas. At this time, the petroleum-based fuel is in the process of being ignited and combusted, and the atmospheric temperature exceeds 1,000°C. Therefore, the petroleum-based fuel easily ignites, and is combusted together with the ammonia.

### PRIOR ART DOCUMENT

### PATENT DOCUMENT

Patent Document 1: Japanese Patent No. 7264386

### SUMMARY OF INVENTION

### TECHNICAL PROBLEM

However, in a conventional engine device such as that described in Patent Document 1, because ammonia easily ignites (fires) under a high temperature atmosphere, unexpected ignition (firing) occurs relatively easily in the combustion chamber of the engine. In the engine, when the pressure inside the cylinder of the combustion chamber becomes excessively high due to a high temperature intake, unexpected ignition (firing) of ammonia occurs regardless of the stroke (cycle). For example, pre-ignition can occur, causing the pressure inside the cylinder of the combustion chamber to rise, which may damage the engine, and may also lead to unstable combustion.

The present invention has an object of providing an engine device that is capable of suppressing pre-ignition and achieving stable combustion in an engine that is driven by heating a low GHG fuel having low greenhouse gas emissions, such as ammonia or methanol.

### SOLUTION TO PROBLEM

In order to solve the problem described above, an engine device of the present invention supplies a fuel to drive an engine, the engine device comprising a heating unit that heats at least one of air that is mixed with the fuel, and the fuel, wherein in a case where pre-ignition of the fuel in the engine occurs, or is predicted, heating by the heating unit is reduced or stopped.

### ADVANTAGEOUS EFFECTS OF INVENTION

According to the present invention, an engine device is provided that is capable of suppressing pre-ignition and achieving stable combustion in an engine that is driven by heating a low GHG fuel having low greenhouse gas emissions, such as ammonia or methanol.

### BRIEF DESCRIPTION OF DRAWINGS

FIG. 1 is a schematic diagram illustrating an example of an engine device according to an embodiment of the present invention.
FIG. 2 is a schematic diagram illustrating another example of an engine device according to an embodiment of the present invention.

### DESCRIPTION OF EMBODIMENTS

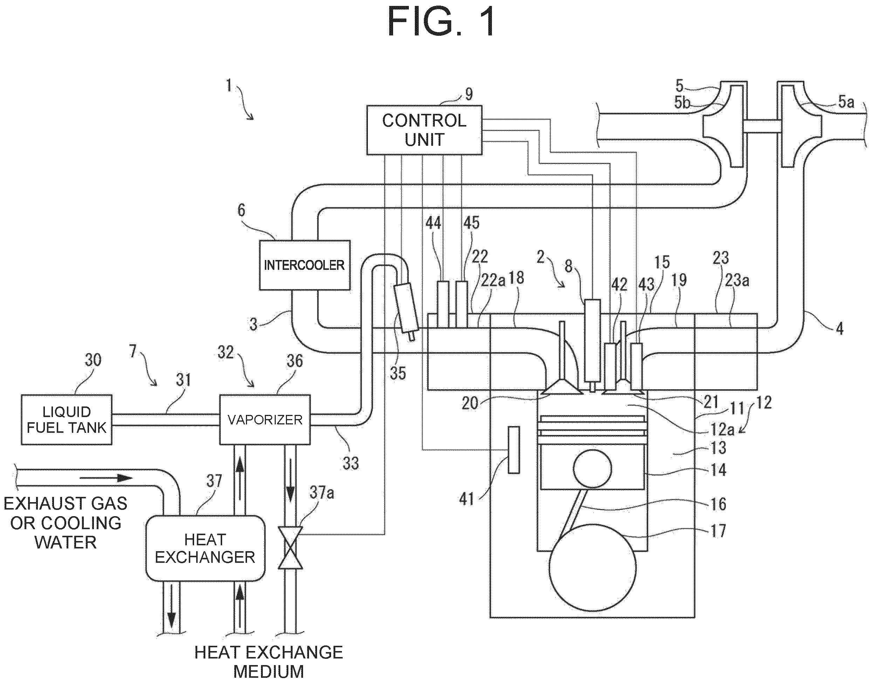

An engine device 1, which is an embodiment of the present invention, will be described with reference to drawings. As shown in FIG. 1, the engine device 1 includes an engine 2, an intake passage 3, an exhaust passage 4, a turbocharger 5, an intercooler 6, a fuel supply mechanism 7, an ignition device 8, and a control unit 9. Furthermore, the engine device 1 includes a knock sensor 41, a cylinder internal pressure sensor 42, a cylinder internal temperature sensor 43, an intake pressure sensor 44, and an intake temperature sensor 45.

In particular, in the present embodiment, the engine device 1 is configured to vaporize a low GHG fuel having low greenhouse gas emissions, such as ammonia or methanol, from a liquid state, and then a fuel supply unit 35 of the fuel supply mechanism 7 supplies the low GHG fuel toward a combustion chamber 12a of each engine cylinder 12 of the engine 2. Further, the engine device 1 is configured to combust a mixed gas containing the low GHG fuel and air in the combustion chambers 12a to drive the engine 2.

The engine 2 includes a plurality of engine cylinders 12 in a cylinder block 11. However, FIG. 1 only illustrates a single engine cylinder 12. As illustrated in FIG. 1, each engine cylinder 12 is configured by a cylinder 13, a piston 14, and a cylinder head 15.

The cylinder 13 is formed, for example, having a cylinder shape inside the cylinder block 11, and the piston 14 is slidably accommodated inside the cylinder 13. The cylinder head 15 is attached to the upper side of the cylinder 13. The combustion chamber 12a is formed on the inner side by the cylinder 13 and the cylinder head 15.

A crankshaft 17 is coupled to the piston 14 via a connecting rod 16 below the cylinder 13, and reciprocating motion of the piston 14 is converted into rotational motion of the crankshaft 17 via the connecting rod 16.

Furthermore, the cylinder head 15 has an intake port 18 and an exhaust port 19 that communicate with the combustion chamber 12a of the cylinder 13, and is provided with an intake valve 20 and an exhaust valve 21 that respectively open and close the intake port 18 and the exhaust port 19 with respect to the combustion chamber 12a.

The intake port 18 is connected to the intake passage 3, and introduces air that is supplied from the intake passage 3 into the combustion chamber 12a. Further, the exhaust port 19 is connected to the exhaust passage 4, and discharges exhaust gas that is generated in the combustion chamber 12a into the exhaust passage 4. By opening the intake valve 20, a mixed gas containing the low GHG fuel and air can be taken into the combustion chamber 12a via the intake port 18. On the other hand, by opening the exhaust valve 21, the exhaust gas generated in the combustion chamber 12a can be discharged via the exhaust port 19.

Note that, in FIG. 1, an example is illustrated in which an intake manifold 22 having a branched flow path 22a that branches from the intake passage 3 to the plurality of engine cylinders 12 is provided between the intake passage 3 and the engine 2 in order to connect the intake passage 3 and the intake port 18 of each of the plurality of engine cylinders 12. Alternatively, the intake passage 3 and the intake port 18 may be directly connected. Furthermore, in FIG. 1, an example is illustrated in which an exhaust manifold 23 having a branched flow path 23a that branches from the exhaust passage 4 to the plurality of engine cylinders 12 is provided between the exhaust passage 4 and the engine 2 in a case where the exhaust passage 4 and the exhaust port 19 of each of the plurality of engine cylinders 12 is connected. Alternatively, the exhaust passage 4 and the exhaust port 19 may be directly connected.

The intake passage 3 causes compressed and cooled air to flow in an intake direction, and supplies the air to each engine cylinder 12 of the engine 2 via the intake port 18 of each engine cylinder 12. The exhaust passage 4 causes the exhaust gas generated in each engine cylinder 12 of the engine 2 and discharged via the exhaust ports 19 to flow in an exhaust direction and be discharged. The turbocharger 5 and the intercooler 6 are provided in the intake passage 3 in this order from an upstream side in the intake direction. Note that an air filter (not shown) that purifies and introduces fresh air may be provided on an upstream end of the intake passage 3 in the intake direction.

The turbocharger 5 compresses the air flowing through the intake passage 3, and delivers the air toward a downstream side in the intake direction.

The turbocharger 5 includes a turbine 5a and a compressor 5b. The turbine 5a is disposed in the exhaust passage 4, and the compressor 5b is disposed in the intake passage 3. The turbine 5a is rotated by the exhaust gas flowing through the exhaust passage 4, and the compressor 5b is driven by the rotational force of the turbine 5a, which causes the air flowing through the intake passage 3 to become compressed. As a result, the pressure of the air that is mixed with the low GHG fuel increases, and the temperature increases. Therefore, by adjusting the rotation speed of the turbocharger 5 (compressor 5b) and/or the pressure of the air that is discharged from the turbocharger 5, the turbocharger 5 functions as a heating unit 40 that heats the air that is mixed with the low GHG fuel.

Furthermore, the intercooler 6 is a heat exchange unit that flows a heat exchange medium (cooling water), and uses the heat exchange medium to cool the air passing through the intercooler 6. In other words, the intercooler 6 functions as a heating unit 40 that heats the air that is mixed with the low GHG fuel by adjusting the flow rate and/or flow velocity of the heat exchange medium, and suppressing or stopping the cooling of the air.

The fuel supply mechanism 7 supplies the low GHG fuel toward the combustion chamber 12a of each engine cylinder 12 of the engine 2. The fuel supply mechanism 7 includes a liquid fuel tank 30, a liquid fuel flow path 31, a vaporization unit 32, a gaseous fuel flow path 33, and a fuel supply unit 35.

The liquid fuel tank 30 is a storage unit that stores the low GHG fuel in a liquid state. The liquid fuel flow path 31 is connected to the liquid fuel tank 30 and the vaporization unit 32, and the low GHG fuel in the liquid state is supplied from the liquid fuel tank 30 to the vaporization unit 32 via the liquid fuel flow path 31 by a pump or the like (not shown).

The vaporization unit 32 vaporizes the low GHG fuel in a liquid state, which is supplied from the liquid fuel tank 30 toward the engine 2, by utilizing waste heat from the engine 2. For example, the vaporization unit 32 includes a vaporizer 36 and a heat exchanger 37.

The vaporizer 36 is connected to the liquid fuel flow path 31 and the gaseous fuel flow path 33, vaporizes the low GHG fuel in a liquid state that is flowing from the liquid fuel flow path 31, and causes the vaporized low GHG fuel in a gaseous state to flow through to the gaseous fuel flow path 33. The heat exchanger 37 causes a heat exchange medium (cooling medium) to flow therethrough, and utilizes waste heat from the engine 2 to heat the heat exchange medium by causing the exhaust gas discharged from the engine 2, or cooling water after heat exchange in the intercooler 6 to flow therethrough. Then, the heat exchanger 37 supplies the heat exchange medium that has been heated to the vaporizer 36, and the vaporizer 36 is a heat exchange unit that heats and vaporizes the low GHG fuel in a liquid state using the heat exchange medium.

Therefore, the vaporizer 36 and the heat exchanger 37 function as the heating unit 40 that heat the low GHG fuel. The heating unit 40 consisting of the vaporizer 36 and the heat exchanger 37 includes a regulating valve 37a in a flow path that causes the heat exchange medium to flow through to the heat exchanger 37. By allowing the flow rate and/or flow velocity of the heat exchange medium to be adjusted by the regulating valve 37a, it is possible to adjust the heating of the low GHG fuel by the vaporizer 36.

The gaseous fuel flow path 33 is connected to the vaporizer 36 and the fuel supply unit 35, and the low GHG fuel in a gaseous state is supplied from the vaporizer 36 to the fuel supply unit 35 via the gaseous fuel flow path 33.

The fuel supply unit 35 has the base end connected to the gaseous fuel flow path 33, and supplies the low GHG fuel in a gaseous state that flows therethrough from the gaseous fuel flow path 33 toward the combustion chamber 12a of each engine cylinder 12 of the engine 2. The fuel supply unit 35 is configured by, for example, a gas admission valve or a gas injector that injects a gaseous fuel. In the fuel supply unit 35, the injection pressure, the injection timing, and the like, of the gaseous fuel is controlled by the control unit 9.

FIG. 1 illustrates an example in which the fuel supply unit 35 is provided such that the low GHG fuel in a gaseous state is supplied to the intake passage 3 further on the upstream side in the intake direction than the intake manifold 22. The mixed gas containing air supplied from the intake passage 3 and the low GHG fuel supplied from the fuel supply unit 35 is supplied to the combustion chamber 12a of each engine cylinder 12.

Note that the fuel supply unit 35 is provided such that the low GHG fuel in a gaseous state is supplied to the intake passage 3 further on the upstream side in the intake direction than the branching to the plurality of engine cylinders 12. Alternatively, the fuel supply unit 35 may be provided such that the low GHG fuel is supplied further on the downstream side than the branching to the plurality of engine cylinders 12, to the intake passage 3 that corresponds to each engine cylinder 12. Alternatively, the fuel supply unit 35 may be provided such that, in order to supply the low GHG fuel to each engine cylinder 12, the low GHG fuel is supplied to each branched flow path 22a of the intake manifold 22, or may be provided such that the low GHG fuel is supplied to each intake port 18, or may be provided such that the low GHG fuel is directly supplied to each combustion chamber 12a.

An ignition device 8 is provided in each engine cylinder 12, and ignites the low GHG fuel inside the combustion chamber 12a of each engine cylinder 12. The ignition device 8 may be configured by a spark ignition type device using an ignition plug, or may be configured by a micro-pilot type device that injects a small amount of a liquid fuel. Alternatively, the ignition device 8 may be configured by a device that compresses and ignites a mixed gas containing a gaseous fuel and a liquid fuel. The ignition timing and the like of the ignition device 8 is controlled by the control unit 9. Furthermore, the injection amount and the like of the ignition device 8, which is configured to inject a liquid fuel, is controlled by the control unit 9.

The control unit 9 is a computer such as an engine control unit (ECU) that controls the operation of the engine 2, is provided with a CPU, a ROM, a RAM, and the like, and is configured to control each unit of the engine 2. The control unit 9 may store various programs for controlling the engine 2, and control the engine 2 by reading out and executing the programs.

The knock sensor 41 detects knocking of the engine 2, and for example, is provided in the cylinder block 11. The knock sensor 41 is connected to the control unit 9, and transmits detection results to the control unit 9.

The cylinder internal pressure sensor 42 detects the pressure inside the engine cylinder 12 (inside the combustion chamber 12a), and for example, is provided in the cylinder head 15. The cylinder internal pressure sensor 42 is connected to the control unit 9, and transmits detection results to the control unit 9.

The cylinder internal temperature sensor 43 detects the temperature inside the engine cylinder 12 (inside the combustion chamber 12a), and for example, is provided in the cylinder head 15. The cylinder internal temperature sensor 43 is connected to the control unit 9, and transmits detection results to the control unit 9.

The intake pressure sensor 44 detects the pressure of the intake to the engine 2, and for example, is provided in the intake manifold 22. The intake pressure sensor 44 is connected to the control unit 9, and transmits detection results to the control unit 9. Note that, in the present embodiment, an example is described in which the intake pressure sensor 44 detects the pressure of a mixed gas containing the low GHG fuel and air as the intake. However, the present invention is not limited to such an example. The intake pressure sensor 44 may detect the pressure of the low GHG fuel or air as the intake.

The intake temperature sensor 45 detects the temperature of the intake to the engine 2, and for example, is provided in the intake manifold 22. The intake temperature sensor 45 is connected to the control unit 9, and transmits detection results to the control unit 9. Note that, in the present embodiment, an example is described in which the intake temperature sensor 45 detects the temperature of a mixed gas containing the low GHG fuel and air as the intake. However, the present invention is not limited to such an example. The intake temperature sensor 45 may detect the temperature of the low GHG fuel or air as the intake.

Note that, in FIG. 1, an example is shown in which the engine device 1 includes the knock sensor 41, the cylinder internal pressure sensor 42, the cylinder internal temperature sensor 43, the intake pressure sensor 44, and the intake temperature sensor 45. However, the present invention is not limited to such an example, and the engine device 1 only needs to include at least one of these sensors.

Furthermore, as a control of the engine 2, in a case where pre-ignition of the low GHG fuel has occurred, or pre-ignition is predicted in the engine 2, the control unit 9 controls each unit so as to reduce or stop the heating by the heating unit 40. At this time, the control unit 9 reduces or stops the heating of at least one of the heating of air by the turbocharger 5, the heating of air by the intercooler 6, and the heating of the low GHG fuel by the vaporizer 36 and the heat exchanger 37. Note that the control unit 9 may control the heating by selectively controlling the turbocharger 5, the intercooler 6, the vaporizer 36, and the heat exchanger 37 as appropriate according to the temperature of the air and the temperature of the low GHG fuel.

The control unit 9 determines the occurrence of, or predicts, pre-ignition of the low GHG fuel in the engine 2 based on the detection result of at least one sensor from among the knock sensor 41, the cylinder internal pressure sensor 42, the cylinder internal temperature sensor 43, the intake pressure sensor 44, and the intake temperature sensor 45. For example, in a case where abnormal knocking has been detected by the knock sensor 41, the control unit 9 may determine that pre-ignition has occurred. In addition, in a case where an abnormal increase in the pressure or temperature of the combustion chamber 12a has been detected by the cylinder internal pressure sensor 42 or the cylinder internal temperature sensor 43, the control unit 9 may determine that pre-ignition has occurred. Also, in a case where an abnormal increase in the pressure or temperature of the intake supplied to the combustion chamber 12a has been detected by the intake pressure sensor 44 or the intake temperature sensor 45, the control unit 9 may determine that pre-ignition is predicted.

Then, based on the detection result of at least one sensor from among the knock sensor 41, the cylinder internal pressure sensor 42, the cylinder internal temperature sensor 43, the intake pressure sensor 44, and the intake temperature sensor 45, the control unit 9 performs a feedback control of the heating by the heating unit 40. For example, in a case where the control unit 9 has determined the occurrence of, or has predicted, pre-ignition based on the detection result of each sensor, the control unit 9 controls each unit such that the heating by the heating unit 40 is reduced or stopped. On the other hand, in a case where the control unit 9 has not determined the occurrence of, or has not predicted, pre-ignition based on the detection result of each sensor, the control unit 9 performs a control that heats the air or the low GHG fuel using the heating unit 40 such that the low GHG fuel can be stably combusted.

As described above, according to the present embodiment, the engine device 1 drives the engine 2 by supplying the low GHG fuel having low greenhouse gas emissions, the engine device 1 including a heating unit 40 that heats at least one of air that is mixed with the low GHG fuel, and the low GHG fuel. In a case where pre-ignition of the low GHG fuel in the engine 2 occurs, or is predicted, heating by the heating unit 40 is reduced or stopped. The engine device 1 specifically utilizes ammonia or methanol as the low GHG fuel.

As a result, in a configuration in which the combustion of the low GHG fuel in the engine 2 is promoted by heating the mixed gas containing the low GHG fuel and air, the engine device 1 reduces or stops the heating of the air or mixed gas supplied to the engine 2, thereby reducing the intake temperature, and suppressing the occurrence of unexpected ignition (firing) of the low GHG fuel, such as the occurrence of pre-ignition. Furthermore, by reducing or stopping the heating of the low GHG fuel, it is possible to reduce the temperature of the low GHG fuel that is injected in a gaseous state, or reduce the temperature of the mixed gas by cooling the intake (air) due to the latent heat of vaporization of the low GHG fuel that is injected in a liquid state.

Therefore, by supplying a mixed gas having a reduced temperature to the combustion chamber 12a, the temperature inside the cylinder of the combustion chamber 12a is reduced, and it is possible to suppress the occurrence of unexpected ignition (firing) of the low GHG fuel inside the combustion chamber 12a, such as the occurrence of pre-ignition. Therefore, in the engine 2, an increase in the pressure inside the cylinder of the combustion chamber 12a caused by pre-ignition can be suppressed, which reduces damage to the engine 2. Furthermore, by suppressing pre-ignition, the low GHG fuel can be stably combusted in the combustion chamber 12a. In this way, according to the present embodiment, it is possible to provide the engine device 1, which is capable of suppressing pre-ignition and achieving stable combustion in the engine 2, which is driven by heating the low GHG fuel having low greenhouse gas emissions, such as ammonia or methanol.

Furthermore, according to the present embodiment, the engine device 1 includes at least one sensor among the knock sensor 41 that detects knocking of the engine 2, the cylinder internal pressure sensor 42 that detects the pressure inside the combustion chamber 12a of the engine 2, the cylinder internal temperature sensor 43 that detects the temperature inside the combustion chamber 12a of the engine 2, the intake pressure sensor 44 that detects the intake pressure into the engine 2, and the intake temperature sensor 45 that detects the intake temperature into the engine 2. Further, pre-ignition of the engine 2 is determined by the control unit 9 based on a detection result of the at least one sensor.

As a result, the engine device 1 is capable of determining the occurrence, or predicting, pre-ignition in the engine 2 by a reliable method using a sensor, and therefore, can appropriately suppress pre-ignition.

Furthermore, according to the present embodiment, the engine device 1 includes the control unit 9, which performs a feedback control of the heating by the heating unit 40 based on the detection result of at least one sensor.

As a result, the engine device 1 is capable of appropriately controlling the heating by the heating unit 40 by a reliable method using a sensor.

In addition, according to the present embodiment, the engine device 1 includes the heat exchange unit, such as the intercooler 6 or the vaporizer 36, through which at least one of air that is mixed with the low GHG fuel, and the low GHG fuel flows, wherein the heat exchange unit functions as the heating unit 40 that heats at least one of the air that is mixed with the low GHG fuel, and the low GHG fuel by adjusting the flow rate and/or the flow velocity of the heat exchange medium that flows into the heat exchange unit.

As a result, the engine device 1 is capable of reducing or stopping heating of the air or low GHG fuel that is supplied to the engine 2 by using the existing intercooler 6 or vaporizer 36, without being provided with a unique heating device.

Moreover, according to the present embodiment, the engine device 1 includes the turbocharger 5 that pressurizes the air that is mixed with the low GHG fuel, wherein the turbocharger 5 functions as the heating unit 40 that heats the air that is mixed with the low GHG fuel by adjusting the rotation speed of the turbocharger 5 and/or the pressure of the air that is discharged from the turbocharger 5.

As a result, the engine device 1 is capable of reducing or stopping heating of the air or low GHG fuel that is supplied to the engine 2 by using the existing turbocharger 5, without being provided with a unique heating device.

Note that, in the embodiment described above, an example has been described in which the engine device 1 causes the intercooler 6 and the turbocharger 5 to function as the heating unit 40 that heats the air supplied to the engine 2. However, the present invention is not limited to such an example. As another example, in the engine device 1, the heating unit 40 that heats the air flowing through the intake passage 3, the intake manifold 22, and the intake port 18 by utilizing waste heat from the engine 2 may be configured by flowing exhaust gas that is discharged from the engine 2 or cooling water after heat exchange in the intercooler 6 with respect to the intake passage 3, the intake manifold 22, or the intake port 18.

Furthermore, in the embodiment described above, an example has been described in which the engine device 1 causes the vaporizer 36 and the heat exchanger 37 as the heating unit 40 that heats the low GHG fuel. However, the present invention is not limited to such an example. As another example, a configuration is possible in which, in the engine device 1, the heating unit 40 heats the low GHG fuel flowing through the intake passage 3, the intake manifold 22, and the intake port 18 by utilizing waste heat from the engine 2 by flowing exhaust gas that is discharged from the engine 2 or cooling water after heat exchange in the intercooler 6 with respect to the intake passage 3, the intake manifold 22, or the intake port 18.

In the embodiment described above, an example has been described in which, in the vaporization unit 32 of the engine device 1, the heat exchanger 37 heats the heat exchange medium by utilizing waste heat from the engine 2 (for example, the exhaust gas that is discharged from the engine 2, or the cooling water after heat exchange in the intercooler 6), and the vaporizer 36 vaporizes the low GHG fuel by indirectly utilizing the waste heat from the engine 2 by heating the low GHG fuel in a liquid state using the heat exchange medium. However, the present invention is not limited to such an example. As another example, a configuration is possible in which the vaporization unit 32 does not include the heat exchanger 37, and the vaporizer 36 directly utilizes waste heat from the engine 2 to heat and vaporize the low GHG fuel in a liquid state.

Furthermore, in the embodiment described above, an example has been described in which the fuel supply mechanism 7 of the engine device 1 vaporizes the low GHG fuel in a liquid state in the vaporizer 36, and then supplies the low GHG fuel in a gaseous state toward the combustion chamber 12a of each engine cylinder 12 of the engine 2 using the fuel supply unit 35. However, the present invention is not limited to such an example.

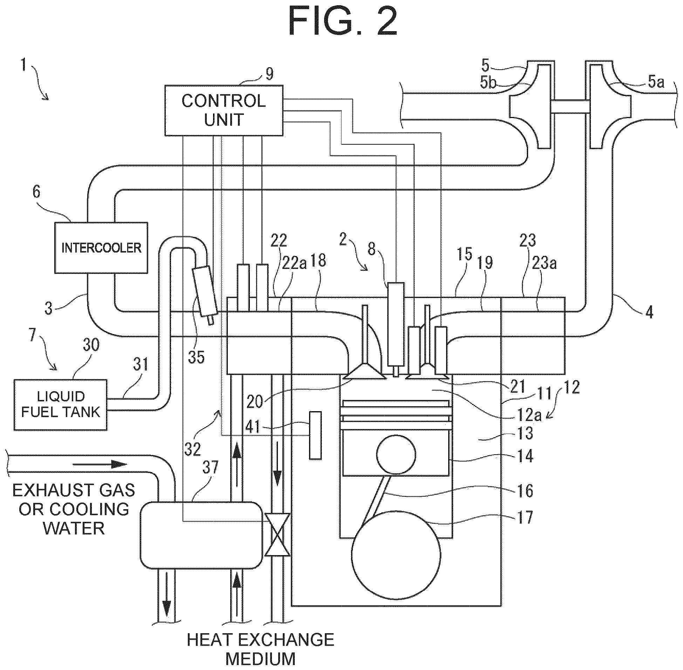

As another example, as shown in FIG. 2, a configuration is possible in which the fuel supply mechanism 7 does not include the vaporizer 36, the fuel supply unit 35 supplies the low GHG fuel in a liquid state toward the combustion chamber 12a of each engine cylinder 12 of the engine 2, and the vaporization unit 32 vaporizes the low GHG fuel by utilizing waste heat from the engine 2 (for example, the exhaust gas that is discharged from the engine 2, or the cooling water after heat exchange in the intercooler 6) to heat part or all of at least one of the intake passage 3, the intake manifold 22, and the intake port 18 further on the downstream side in the intake direction than the position in which the low GHG fuel is provided.

For example, the heat exchanger 37 may utilize waste heat from the engine 2 to heat the heat exchange medium, and the vaporization unit 32 may vaporize the low GHG fuel in a liquid state by indirectly utilizing waste heat from the engine 2 by heating the intake passage 3, the intake manifold 22, or the intake port 18 using the heat exchange medium. Alternatively, a configuration is possible in which the vaporization unit 32 does not include the heat exchanger 37, and vaporizes the low GHG fuel in a liquid state by directly utilizing waste heat from the engine 2 to heat the intake passage 3, the intake manifold 22, or the intake port 18.

In the embodiment described above, an example has been described in which, as a result of the components that utilize waste heat from the engine 2 (such as the turbocharger 5, the intercooler 6, the vaporizer 36, and the heat exchanger 37), the heating unit 40 of the engine device 1 heats the low GHG fuel or the air that is mixed with the low GHG fuel. However, the present invention is not limited to such an example. As another example, the heating unit 40 may heat the low GHG fuel or the air by a configuration that utilizes an additional heater that operates due to external energy in addition to a configuration that utilizes waste heat from the engine 2, or instead of a configuration that utilizes waste heat from the engine 2.

The heating and stopping of the additional heater is controlled by the control unit 9. The additional heater may be provided in the liquid fuel flow path 31, the gaseous fuel flow path 33, the vaporizer 36, or the fuel supply unit 35, and may also be provided in the intake passage 3, the intake manifold 22, or the intake port 18.

Furthermore, in a case where the heating unit 40 includes both a configuration that utilizes waste heat from the engine 2 and a configuration that utilizes an additional heater, the control unit 9 may perform a control that switches between the configuration that utilizes waste heat from the engine 2 and the configuration that utilizes an additional heater according to the operation status and the operation environment of the engine device 1.

For example, when the engine 2 is started, the temperature of the waste heat from the engine 2 (for example, the exhaust gas that is discharged from the engine 2, or the cooling water after heat exchange in the intercooler 6) has not increased to a temperature at which it is possible to sufficiently vaporize the low GHG fuel in a liquid state. Therefore, the control unit 9 performs heating using the configuration that utilizes an additional heater when the engine 2 is started. Note that the control unit 9 may determine the starting of the engine 2 as the time period until a predetermined time elapses after the starting of the engine 2 begins, or the time period until the exhaust gas that is discharged from the engine 2, or the cooling water after heat exchange in the intercooler 6, reaches a predetermined temperature. In addition, after the engine 2 is started, the control unit 9 performs heating by switching from the configuration that utilizes an additional heater to the configuration that utilizes waste heat from the engine 2.

According to another embodiment, the engine device 1 includes an additional heater that performs heating in order to vaporize the fuel that is supplied from the liquid fuel tank 30 to the engine 2 when the engine 2 is started.

As a result, in the case of an operation status or an operation environment of the engine device 1 in which vaporization of the liquid fuel or temperature preservation of the gaseous fuel cannot be performed by waste heat from the engine 2, the engine device 1 can switch to operation of the additional heater to vaporize the liquid fuel or preserve the temperature of the gaseous fuel.

### <Supplementary Note 1>

An engine device that supplies a fuel to drive an engine, the engine device comprising:
a heating unit that heats at least one of air that is mixed with the fuel, and the fuel, wherein
in a case where pre-ignition of the fuel in the engine occurs, or is predicted, heating by the heating unit is reduced or stopped.

### <Supplementary Note 2>

The engine device according to supplementary note 1, comprising
at least one sensor among a knock sensor that detects knocking of the engine, a cylinder internal pressure sensor that detects a pressure inside a combustion chamber of the engine, a cylinder internal temperature sensor that detects a temperature inside a combustion chamber of the engine, an intake pressure sensor that detects an intake pressure into the engine, and an intake temperature sensor that detects an intake temperature into the engine, wherein
pre-ignition of the engine is determined based on a detection result of the at least one sensor.

### <Supplementary Note 3>

The engine device according to supplementary note 2, comprising
a control unit that performs a feedback control of heating by the heating unit based on a detection result of the at least one sensor.

### <Supplementary Note 4>

The engine device according to any one of supplementary notes 1 to 3, compri sing
a heat exchange unit through which at least one of the air that is mixed with the fuel, and the fuel flows, wherein
the heat exchange unit functions as the heating unit that heats at least one of the air that is mixed with the fuel, and the fuel by adjusting a flow rate and/or a flow velocity of a heat exchange medium that flows into the heat exchange unit.

### <Supplementary Note 5>

The engine device according to supplementary notes 1 to 4, comprising
a turbocharger that pressurizes the air that is mixed with the fuel, wherein
the turbocharger functions as the heating unit that heats the air that is mixed with the fuel by adjusting a rotation speed of the turbocharger and/or a pressure of air that is discharged from the turbocharger.

### <Supplementary Note 6>

The engine device according to any one of supplementary notes 1 to 5, wherein
the fuel is ammonia or methanol.

### REFERENCE SIGNS LIST

1 Engine device
2 Engine
3 Intake passage
4 Exhaust passage
5 Turbocharger
5a Turbine
5b Compressor
6 Intercooler
7 Fuel supply mechanism
8 Ignition device
9 Control unit
11 Cylinder block
12 Engine cylinder
12a Combustion chamber
13 Cylinder
14 Piston
15 Cylinder head
16 Connecting rod
17 Crankshaft
18 Intake port
19 Exhaust port
20 Intake valve
21 Exhaust valve
22 Intake manifold
22a Branched flow path
23 Exhaust manifold
23a Branched flow path
30 Liquid fuel tank
31 Liquid fuel flow path
32 Vaporization unit
33 Gaseous fuel flow path
35 Fuel supply unit
36 Vaporizer
37 Heat exchanger
37a Regulating valve
40 Heating unit
41 Knock sensor
42 Cylinder internal pressure sensor
43 Cylinder internal temperature sensor
44 Intake pressure sensor
45 Intake temperature sensor

## Claims

1. An engine device that supplies a fuel to drive an engine, the engine device comprising:
a heating unit that heats at least one of air that is mixed with the fuel, and the fuel, wherein
in a case where pre-ignition of the fuel in the engine occurs, or is predicted, heating by the heating unit is reduced or stopped.

2. The engine device according to claim 1, comprising
at least one sensor among a knock sensor that detects knocking of the engine, a cylinder internal pressure sensor that detects a pressure inside a combustion chamber of the engine, a cylinder internal temperature sensor that detects a temperature inside a combustion chamber of the engine, an intake pressure sensor that detects an intake pressure into the engine, and an intake temperature sensor that detects an intake temperature into the engine, wherein
pre-ignition of the engine is determined based on a detection result of the at least one sensor.

3. The engine device according to claim 2, comprising
a control unit that performs a feedback control of heating by the heating unit based on a detection result of the at least one sensor.

4. The engine device according to claim 1, comprising
a heat exchange unit through which at least one of the air that is mixed with the fuel, and the fuel flows, wherein
the heat exchange unit functions as the heating unit that heats at least one of the air that is mixed with the fuel, and the fuel by adjusting a flow rate and/or a flow velocity of a heat exchange medium that flows into the heat exchange unit.

5. The engine device according to claim 1, comprising
a turbocharger that pressurizes the air that is mixed with the fuel, wherein
the turbocharger functions as the heating unit that heats the air that is mixed with the fuel by adjusting a rotation speed of the turbocharger and/or a pressure of air that is discharged from the turbocharger.

6. The engine device according to claim 1, wherein the fuel is ammonia or methanol.
